# EUROPEAN PATENT APPLICATION

(11) **EP 2 088 770 A1**
(43) Date of publication of application: **12.08.2009**
(21) Application number: 08300073.7
(22) Date of filing: 06.02.2008
(51) Int. Cl.: H04N 5/262, H04N 5/265, H04N 5/268

(54) **Video production switcher and method of operation**

(71) Applicant: Thomson Licensing, 92100 Boulogne-Billancourt (FR)
(72) Inventor: Krug, Alfred, 63931 Kirchzell (DE); Schanz, Friedhelm, 64295 Darmstadt (DE); Rufenach, Jan, 64319 Pfungstadt (DE)
(74) Representative: Lindemann, Robert

(57) **Abstract**

The present invention relates to a video production switcher (200) and method of operation thereof. An exemplary video production switcher (200) comprises at least one control panel (202) that stores a subset of a plurality of preset data inputs (214) until commanded to forward the subset of the plurality of preset data inputs (214) for execution. The exemplary video production switcher (200) also comprises a frame unit (206) that receives the subset of the plurality of preset data inputs (214) when forwarded from the at least one control panel (202) and executes a transition of a display from a first state represented by a plurality of elements of status data (208) to a second state represented in part by the subset of the plurality of preset data inputs (214).

## Description

The present invention relates to a video production switcher that employs a plurality of control units to perform transitions of video data provided by a frame unit.

Video production switchers are typically organized in mix effect stages that are located in a video frame and controlled by a transition control unit. The transition control unit can be a hard key module (transition module of a control panel) or a page of a graphical user interface (GUI). A common characteristic of these control interfaces is that they prepare the video frames transition stage for the next transition. This preparation is stored in the frame and is visible to all control interfaces at the same time. Later on, the next transition can be triggered from any transition control unit with a CUT-, AUTO-button or LEVER ARM to be executed in the video frame. The result of the execution of the transition is sent as a feedback to all control units for display purposes. Known control units, however, lack the ability to execute combined or more complex transitions independent from the next transition status of the current video frame.

U.S. Patent Publication No. 20020186233 by Holtz, et al. purports to disclose an integrated, fully automated video production system that provides a video director with total control over all of the video production devices used in producing a show. Such devices include, but are not limited to, cameras, robotic pan/tilt heads, video tape players and recorders (VTRs), video servers and virtual recorders, character generators, still stores, digital video disk players (DVDs), audio mixers, digital video effects (DVE), video switchers, and teleprompting systems. The video production system provides an automation capability that allows the video director to pre-produce a show, review the show in advance of "air time," and then, with a touch of a button, produce the live show. In one embodiment, the invention provides a video production system having a processing unit in communication with one or more of the video production devices mentioned above. The processing unit displays on a monitor graphical controls for controlling the variety of video production devices that it is in communication with. A video director uses a keyboard and mouse that are interfaced with the processing unit to activate the graphical controls, and thereby remotely control the video production devices from one location. The processing unit also enables the video director to automate the production of a show. According to one embodiment, the video director pre-produces the show, defines a set of video production commands or instructions (hereafter "transition macro") to be executed by the processing unit, and then, by activating a control button displayed by the processing unit, the video director instructs the processing unit to execute the transition macro. Each video production command in a transition macro directs the processing unit to transmit in series and/or parallel one or more control commands to one or more of the video production devices when required.

U.S. Patent No. 6,831,704 to Windrem, et al. purports to disclose a video production architecture that adds an additional transition element for controlling external devices in synchronism with a given transition so that the transition is treated like a simple mix or wipe. The additional transition element is a "Trigger" function that has a value indicating when during the given transition the external device is activated. The trigger function, device controlled and trigger value are set up during pre-configuration of an effect in an effects memory. When the effect is recalled, if the Trigger function is activated on a switcher control panel, then the external device is activated at the time during the given transition specified by the trigger value.

U.S. Patent Publication No. 20040027368 to Snyder, et al. purports to disclose an integrated, fully automated video production system that provides a video director with total control over all of the video production devices used in producing a show via a hierarchical time sheet. The video production system provides an automation capability that allows the video director to pre-produce a show, review the show in advance of "air time," and then, with a touch of a button, produce the live show. In one embodiment, the invention provides a video production system having a processing unit in communication with one or more of the video production devices mentioned above. According to an embodiment, the video director pre-produces the show, defines a set of video production commands or instructions (hereafter "transition macro") to be executed by the processing unit, and then, by activating a control button displayed by the processing unit, the video director instructs the processing unit to execute the transition macro via the hierarchical time sheet. The hierarchical time sheet includes a plurality of control lines and a possible plurality of hierarchical group layers. Each of the control lines corresponds to a video production device in a preferred embodiment. The video director creates a transition macro by defining one or more hierarchical group layer GUIs, where the group layer GUIs may include an object group layer GUI, a TME group layer GUI, a page group layer GUI, a story layer GUI and a show layer GUI. A show is the container for everything, which can be divided into various story layers. A story can contain multiple page layers, a page layer can contain multiple TME layers, and a TME layers can contain multiple object layers.

U.S. Patent No. 5,166,797 to Angell purports to disclose a video production switcher that comprises a background mixer, a program bus for connecting a selected video source to the program input of the background mixer, and a downstream key mixer and a preview mixer each having a background input and a key fill input. The key fill inputs of the downstream key mixer and the preview mixer are each connected to receive the same key fill video signal. Each of the latter mixers combines the signal present at its background input with the signal present at its key fill input in dependence on the signal present at its control input. A preview selector connects the background input of the preview mixer selectively either to a second video source, or to the program bus, or to a third video source, and a key control switch connects the transition control input of the preview mixer selectively either to a reference potential level or to a key signal source.

U.S. Patent Publication No. 20050219417 by Ross, et al. purports to disclose a method, system, and device for video production, including adding a mixer to an Auxiliary Bus of a Video Production Switcher; adding one or more keyers to the Auxiliary Bus of the Video Production Switcher; and adding special effects to the Auxiliary Bus.

International Patent Publication No. WO/2002007440 by Costanzo, et al. purports to disclose a computer system and method that provides for viewing and switching of audio-video data. The system comprises: a plurality of audio/video sources containing information referring to an event; a streaming server, streaming the contents of a first audio signal and a first video signal from the audio and video sources to a user; a feed distributor controllably feeding the first audio signal and first video signal to the streaming server; and a user-operated control unit communicating with the feed distributor and controlling operation of the feed distributor, so as to instruct the feed distributor to switch between audio or video. Switching between audio signals occurs without altering the video signals and switching between video signals occurs without altering the audio signals.

U.S. Patent No. 6,792,469 to Callahan, et al. purports to disclose an Integration Controller (IC) that integrates broadcast automation systems and thereby provides a single command and control center for monitoring production of the audio and video stream. An event-based schedule, or a "playlist," specifies the segments to be played along with the necessary timing and hardware information. Each event in the schedule commands the playback or record of a video segment, generation of a special effect, transfer of a video segment from one device to another or closure of one or more video switches. Events may be launched automatically at a specified time, or manually by an operator. An IC communicates with an Event Scheduling System via a Scheduling System Interface. The Scheduling System Interface communicates with the Integration Controller via the IC server. The IC server utilizes various modules to communicate with Device Drivers, a Log Manager and one or more User Interfaces.

U.S. Patent No. 6,421,095 to Windrem purports to disclose a mix/effect bank that has its capability doubled by increasing the number of keyers input from two to four. The outputs from the keyers are routed through a crosspoint matrix for form a current and a next stack representing the priority of the keyer outputs from highest to lowest. The current stack is input to a current priority combiner and the next stack is input to a next priority combiner. The output of the current priority combiner is a program video output bus and the output of the next priority combiner is a preview video output bus. The two buses are input to a transition mixer, the output of which is coupled through a program/preview switch to the program video output bus. The transition mixer passes the output of the current priority combiner to the program video output bus except when the transition is made between preview and program, at which point the transition product is provided to the program video output bus. At the completion of the transition the next stack is switched to the current stack in the crosspoint matrix and the transition mixer again passes the output from the current priority combiner to the program video output bus.

U.S. Patent No. 7,013,361 to Liron purports to disclose a system that uses a variable input/output architecture to enable multiple matrix sizes to be implemented in a single product. Switches are used to connect a subset of input and output connectors to either an input pin or an output pin. These switches allow users to select the number of input connectors and output connectors available for their particular application. The system enables a single product to replace a range of routing switchers of different sizes. The user can also reconfigure the routing switcher size should application requirements change. This allows the user to configure the routing switcher matrix size to exactly meet the application requirements.

An improved system and method for applying transitions in a video production switcher is desirable.

A video production switcher in accordance with an exemplary embodiment of the present invention is recited in claim 1. The exemplary video production switcher comprises at least one control panel that stores a subset of a plurality of preset data inputs until commanded to forward the subset of the plurality of preset data inputs for execution. The exemplary video production switcher also comprises a frame unit that receives the subset of the plurality of preset data inputs when forwarded from the at least one control panel and executes a transition of a video signal from a first state represented by a plurality of elements of status data to a second state represented in part by the subset of the plurality of preset data inputs.

An exemplary video production switcher may additionally comprise at least a second control panel that stores a second subset of the plurality of preset data inputs until commanded to forward the second subset of the plurality of preset data inputs for execution, wherein at least one element of the second subset of the plurality of preset data inputs overlaps a corresponding element of the subset of the plurality of preset data inputs. The video production switcher may further comprise an independent control path for each of the at least one control panels.

A video production switcher in accordance with an exemplary embodiment of the invention may comprise a feedback path that is adapted to provide feedback about the second state from the frame unit to the at least one control panel. In addition, an exemplary video production switcher may be constructed in such a manner that second state corresponds to a plurality of current hardware settings of the frame unit.

A method of operating a video production switcher in accordance with an exemplary embodiment of the present invention is set forth in claim 6. The exemplary method comprises storing a subset of a plurality of preset data inputs locally on at least one control panel and receiving at the at least one control panel a command to forward the subset of the plurality of preset data inputs for execution. The method further comprises receiving the subset of the plurality of preset data inputs at a frame unit along with a command to execute a transition of a video signal provided by the frame unit from a first state represented by a plurality of elements of status data to a second state represented in part by the subset of the plurality of preset data inputs, and executing the command to transition the video signal from the first state to the second state at the frame unit.

The exemplary method may further comprise storing a second subset of the plurality of preset data inputs at a second control panel, wherein at least one element of the second subset of the plurality of preset data inputs overlaps or replaces a corresponding element of the subset of the plurality of preset data inputs, and receiving a command to forward the second subset of the plurality of preset data inputs for execution. In addition, the exemplary method may comprise receiving the second subset of the plurality of preset data inputs at the frame unit along with a command to execute a transition of the video signal from the second state represented at least in part by the subset of the plurality of preset data inputs to a third state represented at least in part by the second subset of the plurality of preset data inputs, and executing the command to transition the video signal from the second state to the third state at the frame unit.

A method in accordance with an exemplary embodiment of the present invention may comprise providing the subset of the plurality of preset data inputs to the frame unit via a control path that is independent from the second control panel. In addition, an exemplary method may comprise providing feedback about the second state from the frame unit to the at least one control panel. Further, in an exemplary method, the second state may correspond to a plurality of current hardware settings of the frame unit.

An exemplary embodiment of the present invention is described with reference to the accompanying drawings. The exemplary embodiment merely exemplifies the invention. Plural possible modifications are apparent to the skilled person. The gist and scope of the present invention is defined in the appended claims of the present application.

FIG. 1 is a block diagram of a known video production switcher.

FIG. 2 is a block diagram of a video production switcher in accordance with an exemplary embodiment of the present invention.

FIG. 3 is a process flow diagram showing a method in accordance with an exemplary embodiment of the present invention.

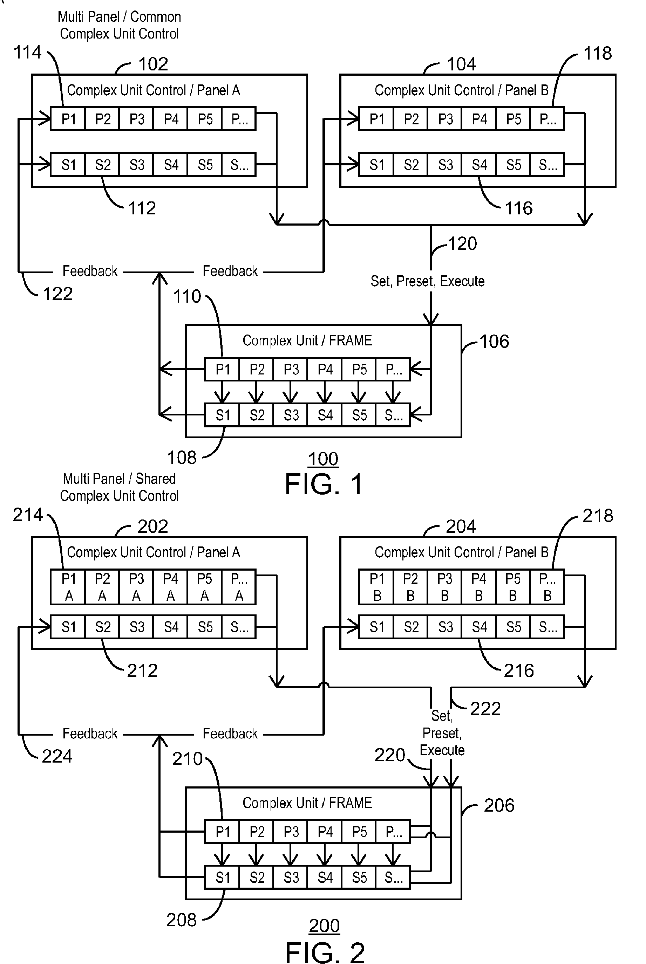

As set forth above, FIG. 1 is a block diagram of a known video production switcher. The video production switcher set forth in FIG. 1 is generally referred to by the reference number 100. By first understanding the operation of the known video production switcher 100, the discussion of an exemplary embodiment of the present invention set forth below with reference to FIG. 2 may be better understood.

The video production switcher 100 comprises a first control panel 102 and a second control panel 104. The first control panel 102 and the second control panel 104 are adapted to provide control inputs to a frame unit 106, which provides and processes a video signal in response thereto. The frame unit 106 comprises a plurality of elements of frame unit status data 108. Individual elements of the frame unit status data 108 are identified in FIG. 1 as S1, S2, S3, S4, S5 and S.... Each element of the frame unit status data 108 corresponds to a different desired characteristic of the video signal output currently being produced by the frame unit 106. Examples of characteristics or properties that may be represented by each element of the frame unit status data 108 include video background, key transitions, and transition components having dedicated names such as BGD, KEY1...KEYn, DVEn or MISCn to name just a few examples. Other characteristics or properties that may be controlled include transition types such as Mix, Wipe, DVE or Utility, for example. In addition elements of transition time, such as duration and offsets may be controlled. This list of characterics is not exclusive and the skilled person will readily recognize a wide range of visual characterics that may be represented by the elements of the frame unit status data 108.
Together, the elements of the frame unit status data 108 act to configure the hardware of the frame unit 108 to affect the appearance of the video signal.

The skilled person will appreciate that a function of the video production switcher 100 is to periodically transition the appearance of the video signal provided by the frame unit 106 by transitioning the frame unit status data from a first state to a second state. A transition is performed using the frame unit 106 by presetting the frame unit 106 with frame unit preset data 110. Individual elements of the frame unit preset data 110 are identified in FIG. 1 as P1, P2, P3, P4, P5 and P.... Each element of the frame unit preset data 110 corresponds to an element of the frame unit status data 108.

Subsequent to the programming of the frame unit preset data 110, a command is issued by either the first control panel 102 or the second control panel 104 to apply the frame unit preset data 110 to cause the frame unit 106 to transition the video signal from the characteristics represented by the frame unit status data 108 to the characteristics represented by the frame unit preset data 110. The command or trigger to perform the transition is delivered from either the first control panel 102 or the second control panel 104 via a control path 120. As shown in FIG. 1, the control path 120 is common between the first control panel 102 and the second control panel 104. Moreover, it is a general behavior that the transition of the video signal of the frame unit 106 is independent relative to either the first control panel 102 or the second control panel 104.

As soon as a transition occurs, feedback is provided from the frame unit 106 to the first control panel 102 and the second control panel 104 via a feedback path 122. In particular, the first control panel 102 is provided with first control panel status data 112 and first control panel preset data 114 via the feedback path 122. In addition, the second control panel 104 is provided with second control panel status data 116 and second control panel preset data 118 via the feedback path 122. No preset data is stored in either the first control panel 102 or the second control panel 104 prior to the execution of the transition by the frame unit 106. Accordingly, the first control panel preset data 114 is the same as the first control panel status data 112. Similarly, the second control panel preset data 118 is the same as the second control panel status data 116.

FIG. 2 is a block diagram of a video production switcher in accordance with an exemplary embodiment of the present invention. The exemplary video production switcher shown in FIG. 2 is generally referred to by the reference number 200 in FIG. 2. The skilled person will appreciate that the video production switcher 200 may comprise hardware elements (including circuitry), software elements (including computer code stored on a machine-readable medium) or a combination of both hardware and software elements.

The video production switcher 200 comprises a first control panel 202 and a second control panel 204. The first control panel 202 and the second control panel 204 can each be programmed with preset data inputs corresponding to video characteristics that are to be implemented by a frame unit 206. The first control panel 202 and the second control panel 204 may operate independently to control complex transitions of the frame unit 206. The skilled person will appreciate that the frame unit 206 may be organized into mix effect stages that are located in and controlled by the first control panel 202 or the second control panel 204.

Each of the control panels in the video production switcher 200 (the first control panel 202 and the second control panel 204 in the exemplary embodiment shown in FIG. 2) may independently transition their data inputs via a local command issued at the individual control panel. Transitions from a first video signal state to a second video signal state may be accomplished by a hard key module (transition module of the first control panel 202 or the second control panel 204). Alternatively, a transition control may be performed using a graphical user interface. As a specific example, a transition can be triggered from either the first control panel 202 or the second control panel 204 with a CUT- or, AUTO-button or LEVER ARM command.

In an exemplary embodiment of the present invention, an execute command is transmitted from the control panel performing a transition, along with the preset data elements that comprise the transition from a first video signal state to a second video signal state. Because an execute command is provided to the frame unit 206 along with a subset of a plurality of data inputs from each of the control panels 202, 204, preset data is not stored in the frame unit 206 as it is in the known frame unit 106. Moreover, the frame unit 206 executes each of the subsets of the plurality of data inputs whenever the subset of the plurality of data inputs is received from a respective one of the control panels 202, 204.

A plurality of elements of frame unit status data 208 correspond to current hardware settings of the frame unit 206. The plurality of elements of frame status data is referred to, respectively, as S1, S2, S3, S4, S5 and S... in FIG. 2. Elements of the first control panel preset data 214 or the second control panel preset data 218 are received as frame unit transition data 210 by the frame unit 206 independently from either the first control panel 202 or the second control panel 204 upon local execution of a command at a respective one of the control panels. Whenever transition data is provided by one of the control panels 202, 204, an execute command is provided at the same time. The frame unit transition data 210 is accordingly applied as soon as it is received rather than being stored.

The skilled person will appreciate that the first control panel 202 and the second control panel 204 may each be programmed to alter only a subset of the frame unit status data 208. Moreover, each of the control panels 202, 204 may transfer a subset of a plurality of elements of status data to the frame unit 206 at any given time. This allows a user to set up partial transitions on each of the first control panels 202 and the second control panel 204 and apply the subsets of preset data independently.

By way of a particular example, the first control panel 202 may comprise first control panel preset data 214.
The first control panel preset data 214 may comprise a plurality of elements, identified as P1A, P2A, P3A, P4A, P5A and P...A in FIG. 2. The second control panel 204 may comprise a plurality of second control panel preset data 218. The second control panel preset data 218 may comprise a plurality of elements, identified as P1B, P2B, P3B, P4B, P5B and P...B in FIG. 2.

In an exemplary transition, a subset of the plurality of first control panel preset data 214 consisting of first control panel preset data elements P2A, P3A and P4A may each be preconfigured and stored locally at the first control panel 202 in advance of an upcoming transition. At the second control panel 204, a subset of the second control panel preset data 218 consisting of second control panel preset data elements P4B, P5B and P...B may be preconfigured and stored locally at the second control panel 204 for a subsequent transition. The subset of the plurality of first control panel preset data 214 (P2A, P3A and P4A) may be applied to the frame unit 206 via a first panel control path 220. Independent of that transition, the subset of the plurality of second control panel preset data 218 (P4B, P5B and P...B) may be applied to the frame unit 206 via a second control panel control path 222.

In the above example, the frame unit 206 receives each of the respective subsets of control panel preset data as frame unit transition data 210 and immediately applies each of the subsets of control panel data to the frame unit 206. In this manner, the two applications of subsets of the control panel preset data will result in changing the values of the frame unit status data 208 to reflect the characteristics of the video signal being provided by the frame unit 206.

The skilled person will appreciate that, in the example set forth above, the fourth element of control panel preset data (P4A and P4B, respectively) was changed by both the first control panel 202 and the second control panel 204. In this manner, a video production switcher 200 in accordance exemplary embodiment of the present invention allows transitions to be controlled by individual control panels in which at least one element of preset data from one control panel overlaps or replaces a corresponding element of preset data from another control panel.

After a transition, the resulting frame unit status data 208 is subsequently provided as feedback to the first control panel 202 and the second control panel 204 via a feedback path 224. In particular, the frame unit status data 208 is provided to the first control panel 202 as first control panel status data 212 and is provided to the second control panel 204 as second control panel status data 216. In this manner, the first control panel 202 and the second control panel 204 always have the current status of the video signal being provided by the frame unit 206. In this manner, the mixing resources of the video production switcher 200 may be shared or distributed among multiple control panels, each of which may have a different operator, with or without interaction according to the various applications needed to provide a video signal via the frame unit 206.

The number of transitions that can be executed on a mixing stage of a frame unit have been increasing significantly in the past and an end is not foreseen. Beside video background and key transitions a lot of additional resources can be touched during a transition. Some are identified with dedicated names (BGD, KEY1 ... KEYn, DVEn) and others are linked to MlSCn transition components. In this case, linking means that some dedicated miscellaneous (MISCn) transition components can be connected to any hardware resource that can supply a dynamic change in behavior of the video output.
Moreover, an exemplary embodiment of the present invention allows a transition stage to employ input from video tape recorders (VTRs) and the like (for example, RamRecs, DiskServers, EMEM effects to name just a few examples. Those resources can be internal to the video production switcher 200, or external to it. An exemplary embodiment of the present invention allows mixing stages to control up to 20-30 transition resources in parallel.

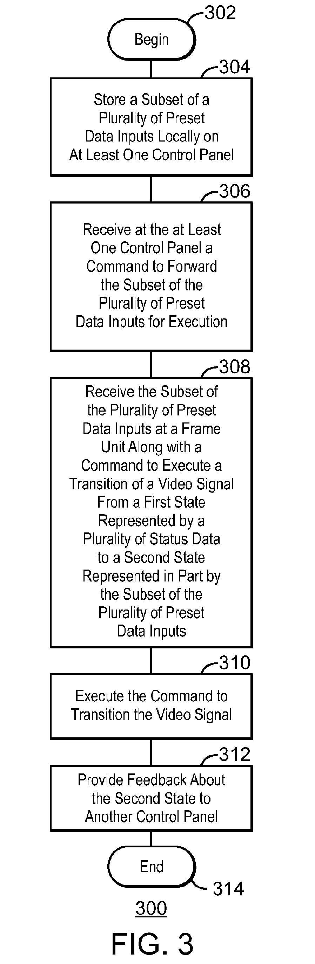

FIG. 3 is a process flow diagram showing a method of operating a video production switcher 200 (FIG. 2) in accordance with an exemplary embodiment of the present invention. The process is generally referred to by the reference number 300. At block 302, the process begins.

At block 304, a subset of a plurality of preset data inputs is stored locally on at least one control panel 202 (FIG. 2). At block 306, the at least one control panel 202 (FIG. 2) receives a command to forward the subset of the plurality of preset data inputs for execution. As shown at block 308, the frame unit 206 (FIG. 2) receives the subset of the plurality of preset data inputs along with a command to execute a transition of a video signal provided by the frame unit 206 (FIG. 2) from a first state represented by a plurality of elements of status data to a second state represented in part by the subset of the plurality of preset data inputs. The command to transition the video signal from the first state to the second state is executed at the frame unit 206 (FIG. 2) at block 310. At block 312, feedback about the second state of the frame unit 206 (FIG. 2) is provided to the first control panel 202 (FIG. 2) and the second control panel 204 (FIG. 2). At block 314, the process ends.

The skilled person will appreciate that combining any of the above-recited features of the present invention together may be desirable depending on particular system design parameters.

## Claims

1. A video production switcher (200), comprising:
- at least one control panel (202) that stores a subset of a plurality of preset data inputs (214) until commanded to forward the subset of the plurality of preset data inputs (214) for execution; and
- a frame unit (206) that receives the subset of the plurality of preset data inputs (214) when forwarded from the at least one control panel (202) and executes a transition of a video signal from a first state represented by a plurality of elements of status data (208) to a second state represented in part by the subset of the plurality of preset data inputs (214).

2. The video production switcher (200) according to claim 1, comprising at least a second control panel (204) that stores a second subset of the plurality of preset data inputs (218) until commanded to forward the second subset of the plurality of preset data inputs (218) for execution, wherein at least one element of the second subset of the plurality of preset data inputs (218) overlaps or replaces a corresponding element of the subset of the plurality of preset data inputs (214).

3. The video production switcher (200) according to claims 1 or 2, comprising an independent control path (220, 222) for each of the at least one control panels (202, 204).

4. The video production switcher (200) according to any one of claims 1 to 3, comprising a feedback path (224) that is adapted to provide feedback about the second state from the frame unit (206) to the at least one control panel (202).

5. The video production switcher (200) according to any one of claims 1 to 4, wherein the second state corresponds to a plurality of current hardware settings of the frame unit (206).

6. A method (300) of operating a video production switcher (200), the method comprising:
- storing (302) a subset of a plurality of preset data inputs (214) locally on at least one control panel (202);
- receiving (304) at the at least one control panel (202) a command to forward the subset of the plurality of preset data inputs (214) for execution;
- receiving the subset of the plurality of preset data inputs (214) at a frame unit (206) along with a command to execute a transition of a video signal provided by the frame unit (206) from a first state represented by a plurality of elements of status data (208) to a second state represented in part by the subset of the plurality of preset data inputs (214); and
- executing the command to transition the video signal from the first state to the second state at the frame unit (206).

7. Method (300) of operating a video production switcher (200) according to claim 6, comprising:
- storing a second subset of the plurality of preset data inputs (218) at a second control panel (204), wherein at least one element of the second subset of the plurality of preset data inputs (218) overlaps or replaces a corresponding element of the subset of the plurality of preset data inputs (214);
- receiving a command to forward the second subset of the plurality of preset data inputs (218) for execution;
- receiving the second subset of the plurality of preset data inputs (218) at the frame unit (206) along with a command to execute a transition of the video signal from the second state represented at least in part by the subset of the plurality of preset data inputs to a third state represented at least in part by the second subset of the plurality of preset data inputs (218); and
- executing the command to transition the video signal from the second state to the third state at the frame unit (206).

8. Method (300) of operating a video production switcher (200) according to claims 6 or 7, comprising providing the subset of the plurality of preset data inputs (214) to the frame unit (206) via a control path (220) that is independent from the second control panel.

9. Method (300) of operating a video production switcher (200) according to any one of claims 6 to 8, comprising providing feedback about the second state from the frame unit (206) to the at least one control panel (202).

10. Method (300) of operating a video production switcher (200) according to any one of claims 6 to 9, wherein the second state corresponds to a plurality of current hardware settings of the frame unit (206).
